# EUROPEAN PATENT SPECIFICATION

(11) **EP 0 741 071 B1**
(45) Date of publication and mention of the grant of the patent: **06.09.2000**
(21) Application number: 96201229.0
(22) Date of filing: 03.05.1996
(51) Int. Cl.: B62H 3/12

(54) **Installation for stowing bicycles**
Aufhängevorrichtung für Fahrräder
Dispositif de parcage aérien de bicyclettes

(30) Priority: 04.05.1995 NL 1000300
(43) Date of publication of application: 06.11.1996
(73) Proprietor: Sijpkens, Jules, 1411 GZ Naarden (NL); Sijpkens, Jeroen Alexander, 1411 GZ Naarden (NL)
(72) Inventor: Sijpkens, Jules, 1411 GZ Naarden (NL); Sijpkens, Jeroen Alexander, 1411 GZ Naarden (NL)
(74) Representative: de Bruijn, Leendert C.

(56) References cited:
- DE-A- 4 119 403
- DE-A- 4 209 007
- DE-C- 485 031
- FR-A- 2 546 123

## Description

The invention is related to an installation for stowing a bicycle, comprising a hingeable arm means for suspending the bicycle by the front wheel essentially in the vertical position, which arm is movable between a low position and a high position, in which low position the bicycle can be coupled to the arm, and in which high position the bicycle which has been coupled up hangs essentially vertically, a pretensioning element being provided for bringing the arm and a bicycle coupled up thereto from the low position into the high position, which pretensioning element engages the arm some distance away from its hingeable suspension and which is pretensioned on bringing the suspension arm from the high position into the low position.

Such installation is known from DE-A-4209007. Said installation comprises a linkage system with three mutually hingeable elements. The linkage system is drivable from a low position to a high position by means of a gas spring. Said installation is rather complicated, and comprises a large number of pivot points.

The object of the invention is to provide an installation of this type which does not have these disadvantages.

This object is achieved in that the point of engagement of the pretensioning element is slidable along the arm in the longitudinal direction, such that said point of engagement moves away from the hingeable suspension of the arm when the arm is moved from the low position into the high position, and vice versa.

As a result of this slidable point of engagement, the righting torque of the arm increases for a given tensile force in the pretensioning element, which is sufficient to ensure progressive movement of arm with bicycle.

The pretensioning means can comprise a draw spring as well as a locking element for locking the draw spring in the pretensioned state.

The operation for coupling up a bicycle is particularly simple in an embodiment wherein the hingeable arm is fork-shaped and a hook projection is provided on one of the arms, which arm is longer than the other arm such that the front wheel of the bicycle can be pushed sideways over the hook projection.

With an embodiment of this type, the front wheel comes to rest between the two arms of the fork when the arm and the bicycle approach the vertical position. The front wheel is consequently secured against detaching from the hook projection.

In order to compensate for the differences in weight between different bicycles, the end stops between which this movement is possible can be adjustable.

Furthermore, a carrier can be provided which can be arranged fixed in the vertical position, the hingeable arm and the pretensioning element being provided on said carrier. With a construction of this type, a guide roller, over which a flexible pulling element is guided, is provided above the hingeable suspension of the arm, which pulling element is connected at one end to the point of engagement on the arm and at the other end to a pretensioning element which extends in the longitudinal direction of the carrier.

The pulling element can be constructed in various ways. Preferably, the pulling element is a chain and the guide roller is a sprocket-wheel. With this construction, the pretensioning element can be locked in the pretensioned state. To this end, the sprocket-wheel is connected to a ratchet-wheel, which ratchet-wheel interacts in ratchet fashion with a locking pawl for tensioning the pretensioning element, and interacts in locking fashion in the relief direction of the pretensioning element.

Said locking pawl is movable between a lock position and a release position by means of a tipping mechanism. A lever is also provided for moving the locking pawl, which lever can be actuated by means of the front wheel of a bicycle as soon as the latter approaches the vertical position, in order to lock the ratchet-wheel.

When taking down the bicycle, the arm is then first of all moved downwards. Because the pawl is in the locked position, the ratchet-wheel engages over the latter, with the result that the pretensioning element is pretensioned but is not able to move back into the position in which the tension is released. When the arm is in the lowest position, the bicycle can be taken off the hook and the arm is then ready and pretensioned for stowing the next bicycle.

The installation according to the invention is suitable for bicycles of very diverse weights. In order to prevent heavy bicycles from nevertheless sagging down a little when in the vertical position, the sprocket-wheel can be connected to a releasable securing element for securing the arm in the high position. Preferably, the securing element comprises a second ratchet-wheel as well as a securing pawl, which interact with one another in the direction opposite to that of the first ratchet-wheel and its pawl.

This supplementary securing element must, of course, be released before a bicycle can be moved downwards. A separate release means, such as a separate handle which is connected to said securing element, could be used for this purpose. However, the operation of such a separate handle constitutes a supplementary operation, which does not benefit the ease of use of the installation. Therefore, the preference is for an embodiment in which the securing pawl is provided with means for releasing the securing action when the securing force exceeds a threshold value.

With this arrangement the bicycle can be moved downwards by initially exerting a somewhat greater downward force which is sufficiently great to overcome the said threshold value. In view of its advantageous, downwards direction, such a force can be exerted by the user without any problem. The securing pawl can, for example, be articulated and comprise two securing pawl sections having a hinged connection, which sections are held, under pretension, in a contact position pressed against one another.

Furthermore, the locking pawl and securing pawl can be movable by means of a single handle which operates both tipping mechanisms.

In order further to reduce the space taken up by the stowed bicycles, the arm is pivotable with respect to the carrier about an essentially vertical rotary shaft. The bicycles can thus be turned at an angle to the wall alongside one another, with the result that the space required is reduced.

An embodiment of the installation according to the invention will now be explained in more detail with reference to the figures.

Figure 1 shows a side view of the installation according to the invention.

Figure 2 shows a detail of the pretensioning mechanism with supporting arm.

Figures 3a and 3b show details relating to the locking element along III-III in Figure 4.

Figure 4 shows a front view of both the locking device and the securing device.

Figures 5a and 5b show side views of the securing device, along V-V in Figure 4.

Figure 6 shows a top view.

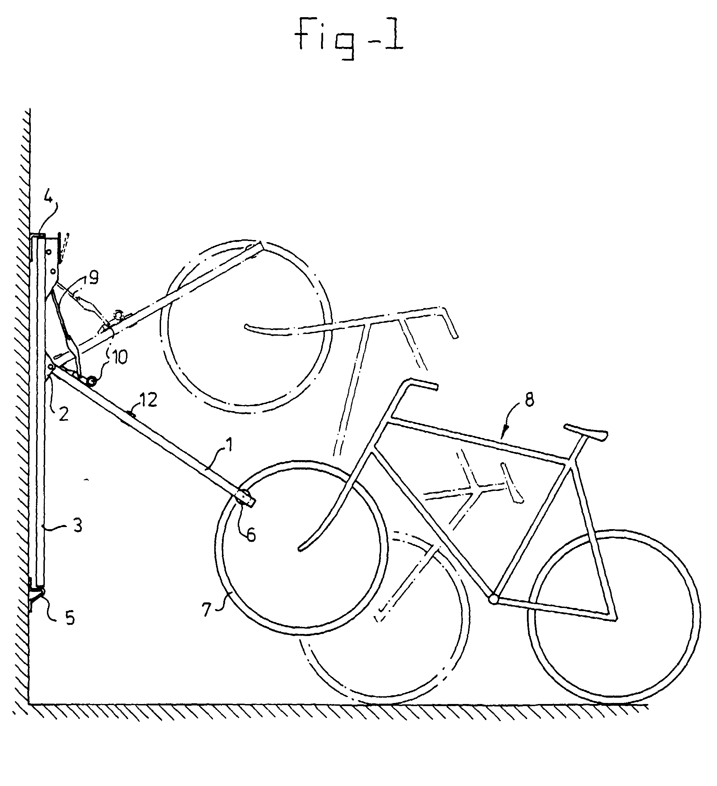

The installation according to the invention shown in Figure 1 comprises a hingeable arm 1 which is connected by means of hinge 2 to the vertical carrier 3. Said carrier 3 is, in turn, pivotable about a vertical rotary shaft, mounted on the supports 4, 5. At its free end, the hingeable arm has a hook 6, over which it is possible to hook the front wheel 7 of a bicycle, which is indicated in its entirety by 8.

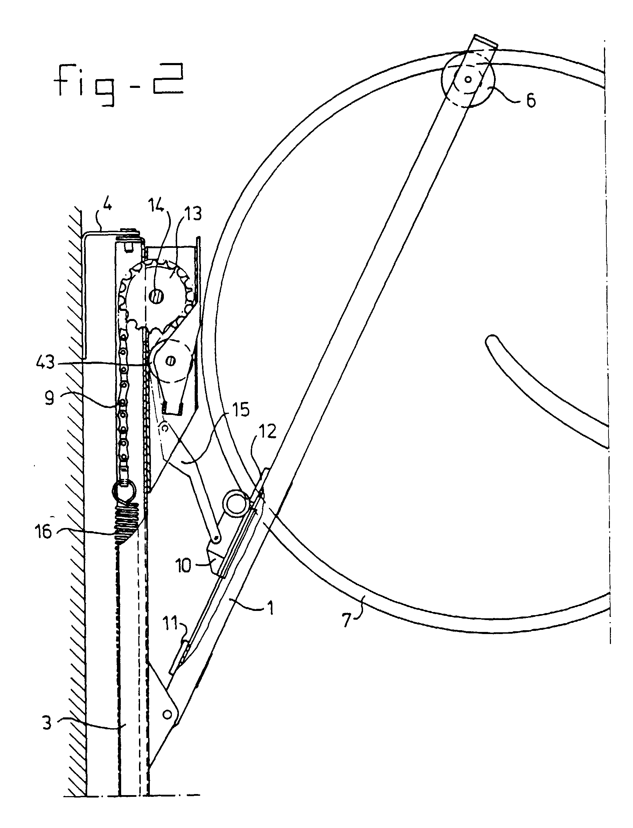

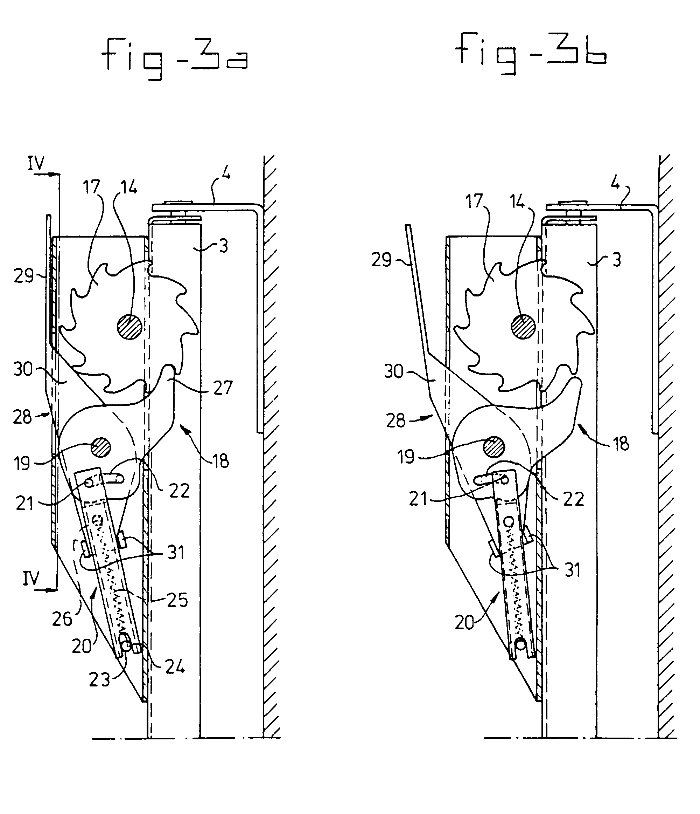

The hingeable arm 1 is further connected to a pulling element 9, which forms part of a pretensioning element which will be described in more detail. Said pulling element 9 is fixed to a slider 10, which can be slid along arm 1 between stops 11 and 12. In the low position of the arm, which is indicated by continuous lines, the slider 10 is located close to the hinge point 2. The righting action of the pretensioning element on the hingeable arm is consequently relatively slight. When the hingeable arm is moved continuously further upwards, which is accompanied by an increasingly greater load exerted by the bicycle 8 on said arm 1, the slider 10 slides such that the righting torque which is exerted by the pretensioning element on said arm 1 becomes greater. By this means the full weight of the bicycle can ultimately be taken up, such that the hingeable arm is able to move into its most upright position, which is shown in Figure 2. It can be seen in Figure 2 that the slider 10 is now in contact with the stop 12.

It can also be seen from Figure 2 that the pulling element is a chain 9, which is guided over sprocket-wheel 13, which is mounted on shaft 14. The chain 9 is connected at one end to an attachment 15, which, in turn, is pivotably fixed to the slider 10. At its other end, the chain 9 is fixed to a spring 16, which, in turn, is attached to the lowermost section of the carrier 3.

Furthermore, the chain 9 is guided over guide wheel 43, as a result of which the sprocket-wheel 13 interacts over a large portion of its circumference with the chain 9.

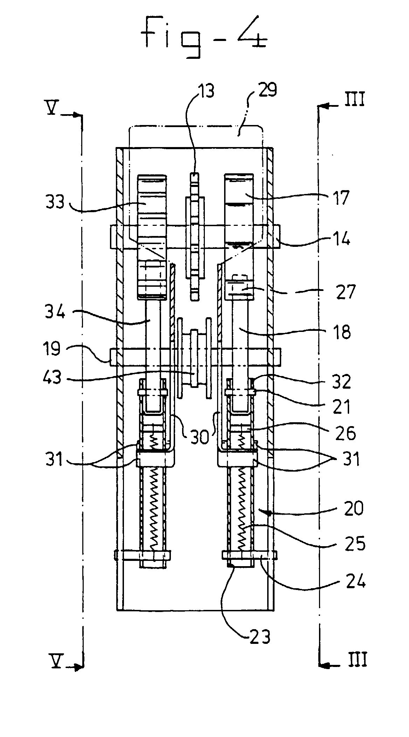

In the front view shown in Figure 4, the sprocket-wheel 13 and shaft 14 are again shown. In this figure the chain has been omitted for reasons of clarity. The ratchet-wheel 17 is mounted on the shaft 14, which ratchet-wheel interacts with pawl 18. As is evident from the views in Figures 3a and 3b, said ratchet-wheel interacts in ratchet fashion with the pawl 18 when the chain 9 is pulled outwards when moving the hingeable arm 1 downwards. The spring 16 is brought under tension during this movement. In the locking position, as shown in Figure 3a, the pawl 18 locks the ratchet-wheel 17 in the direction in which the spring 16 attempts to release the tension.

The pawl 18 can be moved between its locking position, as shown in Figure 3a, and its release position, as shown in Figure 3b, by means of the following mechanism. Pawl 18, which is pivotably mounted on shaft 19, interacts with a hollow operating rod 20, which at one end carries a pin 21, which is slidably accommodated in the partially circular slot 22 of the pawl 18, and at the other end has two longitudinal grooves 23, which are slidable on the pin 24, which is fixed with respect to the carrier 3.

A draw spring 25 is located in the interior of the hollow operating rod 20, which draw spring 25 is fixed at one end to a bridge 26, which is located in the hollow operating rod 20, and at the other end is fixed to the fixed pin 24. The spring 25 therefore holds the hollow operating rod 20 continually resiliently pressed in the direction of the pin 24.

In the position shown in Figure 3a, the pin 21 at the end of the hollow operating rod 20 is in the left-hand portion of slot 22, such that the tensile force which the hollow operating rod 20 is exerting on pawl 18 attempts to tilt the latter to the left with respect to the shaft 19. By this means, tooth 27 of pawl 18 is held in engagement with the ratchet-wheel 17.

Moving the hollow operating rod 20 about the pin 24, such that pin 21 comes into the right-hand portion of the slot 22 in the pawl 18, leads to the pawl 18 turning about the shaft 19, specifically to the right into the position as shown in Figure 3b. Movement of the hollow operating rod 20 is effected by means of handle 28. Said handle 28 has a grab 29, as well as two flanges 30, which are pivotably arranged around shaft 19. As can be seen in Figures 3a, 3b and 4, said flanges 30 each have two outward-facing noses 31, the hollow operating rod 20 being accommodated between one of these pairs of noses with some play.

When the grab 29 is grasped by hand and pulled away from the position shown in Figure 3a into the position shown in Figure 3b, the noses 31, in turn, force the hollow operating rod 20 into the position shown in Figure 3b. As a consequence of this, pawl 18 turns into its release position. Conversely, pushing back grab 29 leads to movement of the hollow operating rod 20 and pawl 18 into the locking position shown in Figure 3a. This pushing back is effected by the front wheel of the bicycle as soon as the latter has been moved fully upwards: see Figure 2.

As can be seen in Figure 4, the end of the hollow operating rod 20 is slot-shaped where pin 21 is located. In this location, pawl 18 is located between the two end flanges 32 of the hollow operating rod 20.

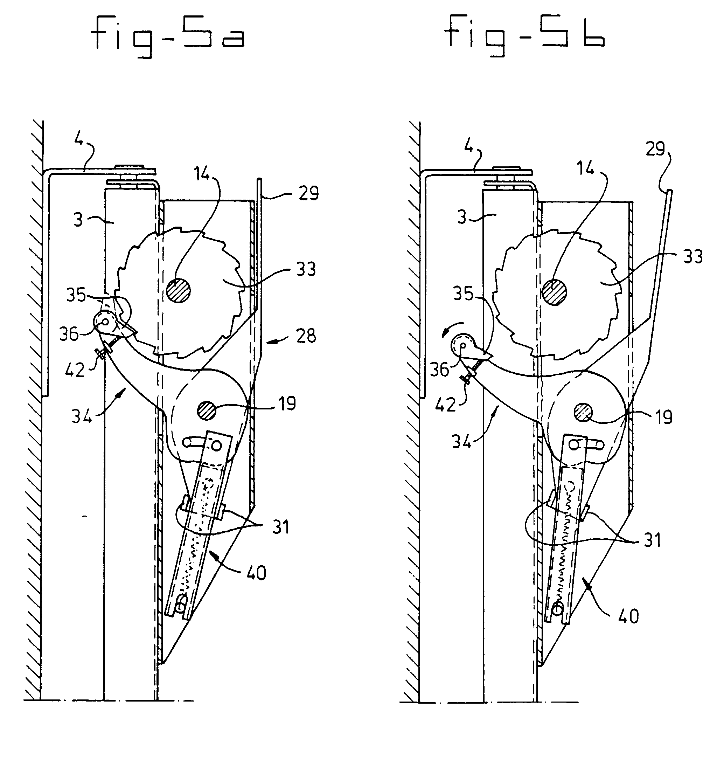

As can also be seen from Figure 4, a second ratchet-wheel 33 is mounted on the shaft 14, on which sprocket-wheel 13 and ratchet-wheel 17 are also located. Said ratchet-wheel 33, a side view of which can be seen in Figures 5a, b, has toothing on its periphery which is opposed to the toothing of the first ratchet-wheel 17. The securing pawl 34, which interacts with said second ratchet-wheel 33, is, however, of different construction. A pawl section 35, which is pivotable about shaft 36, is provided on the securing pawl 34, which is hingeable about shaft 19. By means of a torsion spring (not shown), said pawl section 35 is held continually pressed in the direction of the position shown in Figure 5a, against adjustable screw 42.

As can be seen in Figure 5a, pawl 34 counteracts stretching of the pretensioning spring. As a result, even relatively heavy bicycles cannot sag down.

However, as soon as a pull is exerted on the bicycle, in order to move this downwards, the pawl section 35 is turned away, in the direction towards the position shown by broken lines, as soon as a certain threshold value is exceeded.

A similar mechanism with a hollow operating rod 40, analogous to the hollow operating rod 20 for operating locking pawl 18, is provided for moving the securing pawl 34 from the securing position shown in Figure 5a into the release position shown in Figure 5b.

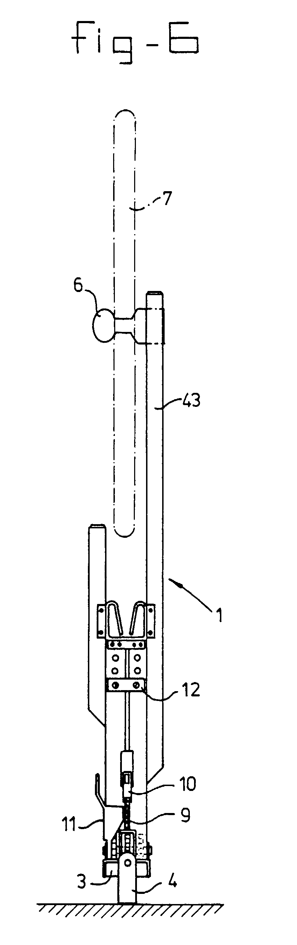

It can be seen from Figure 6 that the arm 1 is fork-shaped. Fork part 43 carries projection 6; fork part 44 is shorter than fork part 43, so that the front wheel 7 can easily be placed over projection 6. Furthermore, stop 11 is constructed as a click mechanism. By this means, the stop 11 can be moved away out of the path of slider 10, after which the arm 1 can be placed completely flat pointing downwards against the wall. Moving the arm 1 upwards from this position causes slider 10 to click behind stop 11.

## Claims

1. Installation for stowing a bicycle (8), comprising a hingeable arm means (1) for suspending the bicycle by the front wheel essentially in the vertical position, which arm (1) is movable between a low position and a high position, in which low position the bicycle (8) can be coupled to the arm (1), and in which high position the bicycle (8) which has been coupled up hangs essentially vertically, a pretensioning element (16) being provided for bringing the arm (1) and a bicycle (8) coupled up thereto from the low position into the high position, which pretensioning element (16) engages the arm (1) some distance away from its hingeable suspension and which is pretensioned on bringing the suspension arm (1) from the high position into the low position, characterized in that the point of engagement of the pretensioning element (16) is slidable along the arm (1) in the longitudinal direction, such that said point of engagement moves away from the hingeable suspension (2) of the arm (1) when the arm (1) is moved from the low position into the high position, and vice versa.

2. Installation according to Claim 1, wherein the pretensioning means comprise a draw spring (16) as well as a locking element (17, 18) for locking the draw spring (16) in the pretensioned state.

3. Installation according to Claim 1 or 2, wherein the hingeable arm (1) is fork-shaped and a hook projection (6) is provided on one of the fork arms (43), which fork arm (43) is longer than the other fork arm (44) such that the front wheel of the bicycle (8) can be pushed sideways over the hook projection (6).

4. Installation according to one of Claims 1-3, wherein a carrier (3) is provided which can be arranged fixed in the vertical position, the hingeable arm (1) and the pretensioning element (16) being provided on said carrier (3).

5. Installation according to Claim 4, wherein a guide element (13), over which a flexible pulling element (9) is guided, is provided above the hingeable suspension (2) of the arm (1), which pulling element (9) is connected at one end to the point of engagement on the arm (1) and at the other end to the pretensioning element (16) which extends in the longitudinal direction of the carrier (3).

6. Installation according to Claim 5, wherein the pulling element is a chain (9) and the guide element is a sprocket-wheel (13).

7. Installation according to Claim 6, wherein the sprocket-wheel (13) is connected to a ratchet-wheel (17), which ratchet-wheel (17) interacts in ratchet fashion with a locking pawl (18) for tensioning the pretensioning element (16), and interacts in locking fashion in the relief direction of the pretensioning element (16).

8. Installation according to Claim 7, wherein the locking pawl (18) is movable between a lock position and a release position by means of a tipping mechanism (20, 28).

9. Installation according to Claim 8, wherein a lever (28, 29, 30) is provided for moving the locking pawl (18), which lever can be actuated by means of the front wheel of a bicycle as soon as the latter approaches the vertical position, in order to lock the ratchet-wheel (17).

10. Installation according to one of Claims 6-9, wherein the sprocket-wheel (13) is connected to a releasable securing element (33, 34) for securing the arm (1) in the high position.

11. Installation according to Claim 10, wherein the securing element comprises a second ratchet-wheel (33) as well as a securing pawl (34), which interact with one another in the direction opposite to that of the first ratchet-wheel (17) and its pawl (18).

12. Installation according to Claim 11, wherein the securing pawl (34) is provided with means (35, 36, 42) for releasing the securing action when the securing force exceeds a threshold value.

13. Installation according to Claim 12, wherein the securing pawl is articulated and comprises two securing pawl sections (34, 35) having a hinged connection, which sections are held, under pretension (36), in a contact position pressed against one another.

14. Installation according to Claim 13, wherein the securing pawl sections (34, 35) are held pressed against one another by means of a torsion spring (36).

15. Installation according to Claim 13 or 14, wherein the mutual stop for the securing pawl sections (34, 35) is constructed as an adjustable screw (42).

16. Installation according to one of Claims 11 - 15, wherein the securing pawl (34) is movable between a securing position and a release position by means of a second tipping mechanism (28, 40).

17. Installation according to Claim 16, wherein locking pawl (18) and securing pawl (34) are movable by means of a single handle (29) which operates both tipping mechanisms.

18. Installation according to one of Claims 4 - 17, wherein the arm (1) is pivotable with the carrier (3) about an essentially vertical rotary shaft.

## Patentansprüche

1. Vorrichtung zum Aufhängen bzw. Verstauen eines Fahrrads (8), umfassend schwenkbare bzw. gelenkige Armeinrichtungen bzw. -mittel (1) zum Aufhängen im wesentlichen in der vertikalen Position des Fahrrads mittels des Vorderrads, wobei der Arm (1) zwischen einer niedrigen Position und einer hohen Position bewegbar ist, wobei in der niedrigen Position das Fahrrad (8) an den Arm (1) gekoppelt werden kann und in der hohen Position das Fahrrad (8), welches gekoppelt wurde, im wesentlichen vertikal hängt, ein Vorspann-element (16), welches vorgesehen ist, um den Arm (1) und ein daran gekoppeltes Fahrrad (8) von der niedrigen Position in die hohe Position zu bringen, wobei das Vorspannelement (16) den Arm (1) in einigem Abstand von seiner schwenkbaren bzw. gelenkigen Aufhängung ergreift und welches durch bzw. beim Bringen des Aufhängungsarms (1) von der hohen Position in die niedrige Position vorgespannt ist, dadurch gekennzeichnet, daß der Eingriffspunkt des Vorspannelements (16) gleitbar entlang des Arms (1) in der Längsrichtung ist, so daß der Eingriffspunkt sich von der gelenkigen Aufhängung (2) des Arms (1) wegbewegt, wenn der Arm (1) von der niedrigen Position in die hohe Position bewegt wird, und umgekehrt.

2. Vorrichtung nach Anspruch 1, worin die Vorspanneinrichtungen bzw. -mittel eine Zugfeder (16) sowie ein Verriegelungselement (17, 18) zum Verriegeln der Zugfeder (16) in dem vorgespannten Zustand umfassen.

3. Vorrichtung nach Anspruch 1 oder 2, worin der gelenkige Arm (1) gabelförmig ist und ein Hakenvorsprung bzw. -fortsatz (6) an einem der Gabelarme (43) vorgesehen ist, welcher Gabelarm (43) länger ist als der andere Gabelarm (44), so daß das Vorderrad des Fahrrads (8) seitlich über den Hakenvorsprung (6) gedrückt werden kann.

4. Vorrichtung nach einem der Ansprüche 1 bis 3, worin ein Träger (3) vorgesehen ist, welcher in der vertikalen Position fixiert angeordnet werden kann, wobei der gelenkige Arm (1) und das Vorspannelement (16) an dem Träger (3) vorgesehen sind.

5. Vorrichtung nach Anspruch 4, worin ein Führungselement (13), über welches ein flexibles Zugelement (9) geführt ist, oberhalb der gelenkigen Aufhängung (2) des Arms (1) vorgesehen ist, wobei das Zugelement (9) an einem Ende mit dem Eingriffspunkt an dem Arm (1) und an dem anderen Ende mit dem Vorspannelement (16) verbunden ist, welches sich in der Längsrichtung des Trägers (3) erstreckt.

6. Vorrichtung nach Anspruch 5, worin das Zugelement eine Kette (9) ist und das Führungselement ein Zahnrad bzw. Kettenrad (13) ist.

7. Vorrichtung nach Anspruch 6, worin das Zahnrad (13) mit einem Sperrklinkenrad (17) verbunden ist, wobei das Sperrklinkenrad (17) in einer Sperrklinken-bzw. Einrastweise mit einer Verriegelungsklinke (18) für ein Spannen des Vorspannelements (16) zusammenwirkt und in einer Verriegelungsweise in der Entlastungsrichtung des Vorspannelements (16) wirkt.

8. Vorrichtung nach Anspruch 7, worin die Verriegelungsklinke (18) zwischen einer Verriegelungsposition und einer Löse- bzw. Freigabeposition mit Hilfe eines Kippmechanismus (20, 28) bewegbar ist.

9. Vorrichtung nach Anspruch 8, worin ein Hebel (28, 29, 30) für ein Bewegen der Verriegelungsklinke (18) vorgesehen ist, wobei der Hebel mit Hilfe des Vorderrads eines Fahrrads betätigt werden kann, sobald das letztere die vertikale Position erreicht, um das Sperrklinkenrad (17) zu verriegeln.

10. Vorrichtung nach einem der Ansprüche 6 bis 9, worin das Zahnrad (13) mit einem lösbaren Sicherungselement (33, 34) zum Sichern des Arms (1) in der hohen Position verbunden ist.

11. Vorrichtung nach Anspruch 10, worin das Sicherungselement ein zweites Sperrklinkenrad (33) sowie eine Sicherungsklinke (34) umfaßt, welche miteinander in der Richtung entgegengesetzt zu derjenigen des ersten Sperrklinkenrads (17) und seiner Klinke (18) zusammenwirken.

12. Vorrichtung nach Anspruch 11, worin die Sicherungsklinke (34) mit Mitteln bzw. Einrichtungen (35, 36, 42) zum Freigeben des Sicherungsvorgangs versehen ist, wenn die Sicherungskraft einen Schwellwert übersteigt.

13. Vorrichtung nach Anspruch 12, worin die Sicherungsklinke gelenkig ist und zwei Sicherungsklinkenabschnitte bzw. -bereiche (34, 35) umfaßt, welche eine gelenkige Verbindung aufweisen, wobei die Abschnitte bzw. Bereiche unter Vorspannung (36) in einer gegeneinander gepreßten Kontaktposition gehalten sind.

14. Vorrichtung nach Anspruch 13, worin die Sicherungsklinkenabschnitte (34, 35) mit Hilfe einer Torsionsfeder (36) gegeneinander gepreßt gehalten sind.

15. Vorrichtung nach Anspruch 13 oder 14, worin der gegenseitige Anschlag für die Sicherungsklinkenabschnitte (34, 35) als eine einstellbare Schraube (42) konstruiert bzw. ausgebildet ist.

16. Vorrichtung nach einem der Ansprüche 11 bis 15, worin die Sicherungsklinke (34) zwischen einer Sicherungsposition und einer Löse- bzw. Freigabeposition mit Hilfe eines zweiten Kippmechanismus (28, 40) bewegbar ist.

17. Vorrichtung nach Anspruch 16, worin die Verriegelungsklinke (18) und die Sicherungsklinke (34) mit Hilfe eines einzigen Handgriffs (29) bewegbar sind, welcher beide Kippmechanismen betätigt.

18. Vorrichtung nach einem der Ansprüche 4 bis 17, worin der Arm (1) mit dem Träger (3) um eine im wesentlichen vertikale Drehwelle verschwenkbar ist.

## Revendications

1. Installation destinée au rangement d'une bicyclette (8), comprenant un moyen de bras articulable (1) destiné à suspendre la bicyclette par la roue avant sensiblement en position verticale, lequel bras (1) est mobile entre une position basse et une position haute, position basse dans laquelle la bicyclette (8) peut être couplée au bras (1), et position haute dans laquelle la bicyclette (8) qui a été couplée pend sensiblement verticalement, un élément de pré-tension (1) étant prévu pour amener le bras (1) et une bicyclette (8) qui lui est couplée de la position basse à la position haute, lequel élément de pré-tension (16) est en prise avec le bras (1) à une certaine distance par rapport à sa suspension articulable et qui est mis en pré-tension en amenant le bras de suspension (1) de la position haute à la position basse, caractérisée en ce que le point de mise en prise de l'élément de pré-tension (16) peut coulisser le long du bras (1) dans la direction longitudinale, de sorte que ledit point de mise en prise se déplace à l'écart de la suspension articulable (2) du bras (1) lorsque le bras (1) passe de la position basse à la position haute, et vice versa.

2. Installation selon la revendication 1, dans laquelle le moyen de pré-tension comprend un ressort de traction (16) de même qu'un élément de verrouillage (17, 18) destiné à verrouiller le ressort de traction (16) dans l'état pré-tendu.

3. Installation selon la revendication 1 ou 2, dans laquelle le bras articulable (1) est en forme de fourche et une saillie d'accrochage (6) est prévue sur l'un des bras de la fourche (43), lequel bras de fourche (43) est plus long que l'autre bras de fourche (44) de sorte que la roue avant de la bicyclette (8) puisse être poussée latéralement sur la saillie d'accrochage (6).

4. Installation selon l'une des revendications 1 à 3, dans laquelle un support (3) est prévu, lequel peut être agencé en étant fixé dans la position verticale, le bras articulable (1) et l'élément de pré-tension (16) étant disposés sur ledit support (3).

5. Installation selon la revendication 4, dans laquelle un élément de guidage (13), sur lequel un élément de traction flexible (9) est guidé, est disposé au-dessus de la suspension articulable (2) du bras (1), lequel élément de traction (9) est relié à une première extrémité au point de mise en prise sur le bras (1) et à l'autre extrémité à l'élément de pré-tension (16) qui s'étend dans la direction longitudinale du support (3).

6. Installation selon la revendication 5, dans laquelle l'élément de traction est une chaîne (9) et l'élément de guidage est un pignon de chaîne (13).

7. Installation selon la revendication 6, dans laquelle le pignon de chaîne (13) est relié à une roue à cliquet (17), laquelle roue à cliquet (17) interagit comme un cliquet avec un cliquet de blocage (18) afin de tendre l'élément de pré-tension (16), et interagit comme un blocage dans la direction de relâchement de l'élément de pré-tension (16).

8. Installation selon la revendication 7, dans laquelle le cliquet de blocage (18) est mobile entre une position de blocage et une position de libération au moyen d'un mécanisme de basculement (20, 28).

9. Installation selon la revendication 8, dans laquelle un levier (28, 29, 30) est disposé pour déplacer le cliquet de blocage (18), lequel levier peut être actionné au moyen de la roue avant d'une bicyclette dès que cette dernière se rapproche de la position verticale, de manière à bloquer la roue à cliquet (17).

10. Installation selon l'une des revendications 6 à 9, dans laquelle le pignon de chaîne (13) est relié à un élément de blocage libérable (33, 34) destiné à bloquer le bras (1) dans la position haute.

11. Installation selon la revendication 10, dans laquelle l'élément de blocage comprend une seconde roue à cliquet (33) de même qu'un cliquet d'arrêt (34), qui interagissent l'un avec l'autre dans la direction opposée à celle de la première roue à cliquet (17) et de son cliquet (18).

12. Installation selon la revendication 11, dans laquelle le cliquet d'arrêt (34) est muni d'un moyen (35, 36, 42) destiné à libérer l'action de blocage lorsque la force de blocage dépasse une valeur de seuil.

13. Installation selon la revendication 12, dans laquelle le cliquet d'arrêt est articulé et comprend deux sections de cliquet d'arrêt (34, 35) présentant une liaison articulée, lesquelles sections sont maintenues, sous une pré-tension (36), à une position de contact pressées l'une contre l'autre.

14. Installation selon la revendication 13, dans laquelle les sections du cliquet d'arrêt (34, 35) sont maintenues pressées l'une contre l'autre au moyen d'un ressort de torsion (36).

15. Installation selon la revendication 13 ou 14, dans laquelle la butée mutuelle pour les sections du cliquet d'arrêt (34, 35) est constituée sous forme d'une vis réglable (42).

16. Installation selon l'une des revendications 11 à 15, dans laquelle le cliquet d'arrêt (34) est mobile entre une position de blocage et une position de libération au moyen d'un second mécanisme de basculement (28, 40).

17. Installation selon la revendication 16, dans laquelle le cliquet de blocage (18) et le cliquet d'arrêt (34) sont mobiles au moyen d'une seule poignée (29) qui actionne les deux mécanismes de basculement.

18. Installation selon l'une des revendications 4 à 17, dans laquelle le bras (1) peut pivoter avec le support (3) autour d'un arbre rotatif sensiblement vertical.
